# EUROPÄISCHE PATENTSCHRIFT

(11) **EP 2 826 653 B1**
(45) Veröffentlichungstag und Bekanntmachung des Hinweises auf die Patenterteilung: **14.12.2016**
(21) Anmeldenummer: 14176301.1
(22) Anmeldetag: 09.07.2014
(51) Int. Cl.: B60K 1/00, B60K 1/02, B60K 6/365, F16H 48/11

(54) **Antriebsstrang für ein Kraftfahrzeug**
Power transmission for a motor vehicle
Transmission de véhicule automobile

(30) Priorität: 18.07.2013 DE 102013214095
(43) Veröffentlichungstag der Anmeldung: 21.01.2015
(73) Patentinhaber: Volkswagen Aktiengesellschaft, 38440 Wolfsburg (DE)
(72) Erfinder: Petersen, Rainer, 38444 Wolfsburg (DE); Möckel, Jörg, 38524 Sassenburg (DE); Meißner, Christian, 38122 Braunschweig (DE)

(56) Entgegenhaltungen:
- DE-A1-102006 040 144
- DE-A1-102008 061 946

## Beschreibung

Die Erfindung bezieht sich auf einen Antriebsstrang für ein Kraftfahrzeug, umfassend
- eine erste elektrische Maschine mit einem Rotor und einem Stator zum Antrieb einer den Rotor koaxial durchsetzenden, zwei Achsschenkel aufweisenden, angetriebenen Achse,
- eine mit dem Rotor gekoppelte, koaxial zu der elektrischen Maschine angeordnete Übersetzungsstufe,
- ein an seinem Eingangselement mit einem Ausgangselement der Übersetzungsstufe gekoppeltes, koaxial zu der Übersetzungsstufe angeordnetes und an seinen Ausgangselementen mit den Achsschenkeln gekoppeltes Differential,
- eine über eine Verstärkungsmechanik mit dem Differential gekoppelte und koaxial zu diesem angeordnete Momentenaufprägungseinheit,
wobei die Verstärkungsmechanik ein koaxial angeordnetes Planetengetriebe mit einer ersten Verstärkungssonne und einem Verstärkungssteg, auf dem ein Satz von mit der ersten Verstärkungssonne kämmenden Verstärkungsplaneten gelagert ist, umfasst, und die erste Verstärkungssonne mit der Momentenaufprägungseinheit gekoppelt ist.

Derartige Antriebsstränge sind bekannt aus der DE 10 2008 061 946 A1.

Diese Druckschrift offenbart eine gattungsgemäße koaxiale Antriebsanordnung für eine elektrisch angetriebene Achse eines Kraftfahrzeugs. Hierzu ist eine elektrische Antriebsmaschine als erste elektrische Maschine vorgesehen, deren Rotor von der anzutreibenden Achse koaxial durchsetzt ist. Die Achse besteht aus zwei über ein Differential verbundenen Achsschenkeln, die jeweils ein Antriebsrad des Kraftfahrzeugs tragen. Insbesondere ist der Rotor der elektrischen Antriebsmaschine von einem dieser Achsschenkel koaxial durchsetzt. Es besteht allerdings keine direkte momentenübertragende Verbindung zwischen dem Rotor und dem ihn durchsetzenden Achsschenkel. Vielmehr ist der Rotor über eine als schaltbares Planetengetriebe ausgebildete Übersetzungsstufe mit dem Steg eines als Stirnraddifferential ausgebildeten Differentials gekoppelt. Dessen Differentialsteg wirkt als Eingangselement des Differentials und trägt zwei miteinander kämmende Sätze von Differentialplaneten, die jeweils mit einer als Ausgangselement des Differentials wirkenden Differentialsonne kämmen. Jede Differentialsonne ist mit einem der Achsschenkel verbunden. Eine derartige Anordnung ist geeignet, ein Antriebsmoment auf die Achsschenkel zu übertragen und gleichzeitig Drehzahldifferenzen zwischen den Achsschenkeln, die insbesondere bei Kurvenfahrten auftreten, zu tolerieren. Unabhängig von der Drehzahldifferenz wird das Drehmoment jeweils zu gleichen Teilen auf die Achsschenkel verteilt.

Um eine von der Gleichverteilung abweichende Momentenverteilung auf die Achsschenkel anzusteuern zu können, weist die bekannte Vorrichtung eine als zweite elektrische Maschine ausgebildete Momentenaufprägungseinheit auf, welche von dem die Antriebsmaschine nicht durchsetzenden Achsschenkel koaxial durchsetzt wird und über eine Verstärkungsmechanik mit dem Differential verbunden ist. Die Verstärkungsmechanik umfasst zwei identisch aufgebaute Planetengetriebe sowie ein drittes Planetengetriebe, dessen Planeten als feste, gemeinsame Baueinheit mit den Planeten eines Satzes der Differentialplaneten ausgebildet sind. Das erste der identischen Planetengetriebe der Verstärkungsmechanik ist über seine Sonne mit dem Rotor der zweiten elektrischen Maschine und über sein Hohlrad mit dem Hohlrad des dritten Planetengetriebes verbunden. Das zweite der identischen Planetengetriebe weist eine am Getriebegehäuse festgelegte Sonne auf und ist über sein Hohlrad mit der Sonne des dritten Planetengetriebes verbunden. Durch geeignete Ansteuerung der zweiten elektrischen Maschine lässt sich an dem Differential ein Steuermoment in wählbarer Richtung aufprägen und damit die Momentenverteilung des Antriebsmomentes auf die beiden Achsschenkel variieren. Dabei wirkt die Verstärkungsmechanik momentenverstärkend, sodass die von der zweiten elektrischen Maschine aufzubringende Leistung wesentlich geringer ausfallen kann als die Leistung der Antriebsmaschine.

Aus der DE 10 2006 040 144 A1 ist ein aktives Differential bekannt, bei dem ein Überlagerungsgetriebe Stufenplaneten mit zwei bzw. drei Stufen aufweist. Eine Momentenaufprägungseinheit ist mit einer Sonne verbunden, die mit einem weiteren Planetenrad kämmt, das mit der Planetenstufe des kleineren bzw. des mittleren Durchmesser kämmt. Eine weitere Momentenaufprägungseinheit ist mit einem Steg des Überlagerungsgetriebes verbunden.

Nachteilig bei den bekannten Systemen ist der konstruktiv aufwendige und erheblichen axialen Bauraum beanspruchende Aufbau der Verstärkungsmechanik mit ihren drei Planetengetrieben bzw. einem komplizierten Planetenradsatz.

Es ist die Aufgabe der vorliegenden Erfindung einen gattungsgemäßen Antriebsstrang derart weiterzubilden, dass die konstruktive Komplexität sowie der axiale Bauraum reduziert werden.

Diese Aufgabe wird in Verbindung mit den Merkmalen des Oberbegriffs von Anspruch 1 dadurch gelöst, dass die Verstärkungsplaneten der Verstärkungsmechanik als Stufenplaneten mit jeweils einer Planetenstufe größeren Durchmessers und einer Planetenstufe kleineren Durchmessers ausgebildet sind, wobei die erste Verstärkungssonne mit den Planetenstufen größeren Durchmessers kämmt, und dass die Verstärkungsmechanik mit dem Eingangselement des Differentials gekoppelt ist.

Bevorzugte Ausführungsformen der Erfindung sind Gegenstand der abhängigen Patentansprüche.

Anstatt die erforderliche Momentenverstärkung für die Momentenaufprägungseinheit über drei Planetengetriebe zu generieren, sieht die Erfindung eine Mechanik auf Basis von Stufenplaneten vor. Je nach Ausführungsform kann ein komplettes Planetengetriebe oder eine einfache Übersetzungsstufe realisiert sein. Hierdurch können, je nach Ausführungsform, ohne weiteres Verstärkungsfaktoren von 10 bis 20 erreicht werden, was eine entsprechend kleinere Auslegung der Momentenaufprägungseinheit gestattet.

Weiterhin ist die Verstärkungsmechanik mit dem Eingangselement des Differentials gekoppelt. Dies ist beim gattungsgemäßen Stand der Technik nicht der Fall. Dort erfolgt die Ankopplung der Verstärkungsmechanik über einen der Sätze von Differentialplaneten. Im Gegensatz dazu ist bei der bevorzugten Ausführungsform der Erfindung, bei der das Differential ebenfalls als Stirnraddifferential ausgebildet ist, die Verstärkungsmechanik mit dem Differentialsteg gekoppelt. Bei einer Ausgestaltung des Differentials als Kegelraddifferential wäre der als Eingangselement wirkende Differentialkorb dasjenige Element, an welchem die Verstärkungsmechanik angekoppelt ist. Grundsätzlich eignen sich sämtliche bekannten Differentialformen zum Einsatz mit der Erfindung, wobei in jedem Fall die Ankopplung der Verstärkungsmechanik bevorzugt über das jeweilige Differential-Eingangselement erfolgt. Der Vorteil dieser Maßnahme liegt in ihrer konstruktiven Einfachheit, die es insbesondere erlaubt, herkömmliche, koaxiale Antriebsstränge mit gleichförmiger Momentenverteilung durch einfache Anbindung einer erfindungsgemäßen Verstärkungsstufe und Momentenaufprägungseinheit zu Antriebssträngen mit variabler Momentenverteilung zu erweitern.

Hinsichtlich der konkreten Ausgestaltung stehen unterschiedliche Möglichkeiten zur Verfügung. Bei einer ersten, als günstig angesehenen Variante ist vorgesehen, dass der Verstärkungssteg mit dem Eingangselement des Differentials gekoppelt ist und die Verstärkungsmechanik eine Koppelsonne aufweist, die mit einem der Achsschenkel verbunden ist und mit den Planetenstufen kleineren Durchmessers der Verstärkungsplaneten kämmt. Durch die doppelte Kopplung der Verstärkungsstufe an das Differential nämlich, zum einen direkt über ihren Verstärkungssteg und zum anderen indirekt über den Achsschenkel mit einer der Differentialsonnen, ist sichergestellt, dass während des normalen Fahrbetriebs kein Einfluss auf die Drehzahlverhältnisse innerhalb des Antriebsstrangs genommen wird. Einer Änderung unterworfen sind lediglich die Momentenverhältnisse. Dabei wird das dem direkt angekoppelten Achsschenkel aufgeprägte Zusatzmoment direkt von der Durchmesserdifferenz der Planetenstufen der Verstärkungsplaneten bestimmt. Dieser Ansatz begrenzt die mögliche Momentenverstärkung.

Bei einer alternativen Ausführungsform ist daher vorgesehen, dass der Verstärkungssteg mit einem der Achsschenkel verbunden ist und die Verstärkungsmechanik ein mit dem Eingangselement des Differentials gekoppeltes Verstärkungshohlrad aufweist, welches mit den Planetenstufen kleineren Durchmessers der Verstärkungsplaneten kämmt. Bei dieser Ausgestaltung ist also die Verstärkungsstufe als komplettes Planetengetriebe ausgebildet, was eine höhere Momentenverstärkung zulässt.

Wie oben bereits erwähnt, ist die konkrete Bauform des Differentials für die Anwendbarkeit der vorliegenden Erfindung nicht grundsätzlich von Belang. Bevorzugt wird jedoch die Ausgestaltung als Stirnraddifferential, welches als Eingangselement einen Differentialsteg aufweist, auf dem zwei miteinander kämmende Sätze von Differentialplaneten gelagert sind, die jeweils mit einer als Ausgangselement wirkenden Differentialsonne kämmen. Die Ausgestaltung als Stirnraddifferential ist aufgrund ihrer Geometrie für den im Zusammenhang mit der vorliegenden Erfindung wesentlichen Aspekt der koaxialen Ausgestaltung des gesamten Antriebsstrangs besonders günstig.

Diese Ausgestaltung des Differentials erlaubt zusätzlich eine besonders günstige Variante der Erfindung, gemäß der die Verstärkungsplaneten als feste, gemeinsame Baueinheit mit den Differentialplaneten eines der Sätze von Differentialplaneten ausgebildet sind. Mit anderen Worten erfährt ein Satz der Differentialplaneten eine Doppelnutzung, nämlich als eigentliche Differentialplaneten und als Verstärkungsplaneten, was eine erneute Reduktion der konstruktiven Komplexität und des Bauraumbedarfs impliziert. Unter einer festen, gemeinsamen Baueinheit sei sowohl eine materialeinheitlich einstückige Ausbildung als auch eine feste Verbindung zweier ursprünglich getrennt gefertigter Elemente zu verstehen.

Bei dieser Ausgestaltung lassen sich jedoch nicht in allen Fällen die erforderlichen Verstärkungsfaktoren generieren. Bei einer anderen Variante ist daher vorgesehen, dass die Verstärkungsplaneten mit ihren Planetenstufen kleineren Durchmessers jeweils mit einer Planetenstufe größeren Durchmessers eines auf dem Verstärkungssteg gelagerten Satzes zusätzlicher Verstärkungsplaneten kämmen, wobei die zusätzlichen Verstärkungsplaneten als feste, gemeinsame Baueinheit mit den Differentialplaneten eines der Sätze von Differentialplaneten ausgebildet sind. Die zusätzlichen Verstärkungsplaneten, die ebenfalls als Stufenplaneten ausgebildet sind, erlauben eine zusätzliche Übersetzungsstufe, sodass eine höhere Momentenverstärkung ermöglicht wird.

Bei beiden vorgenannten Varianten liegt der wesentliche konstruktive Vorteil in der gemeinsamen Nutzung eines Steges sowohl für die Verstärkungsstufe als auch für das Differential. Unter isolierter Betrachtung dieses Aspektes ist es auch möglich, von der vorgenannten Ausbildung als feste, gemeinsame Baueinheit von Verstärkungs- und Differentialplaneten abzusehen und diese durch miteinander kämmende Planetensätze auf demselben Steg zu ersetzen.

Für die Ausgestaltung der Momentenaufprägungseinheit sind insbesondere zwei besonders günstige Varianten vorgesehen. Bei einer Variante ist die Momentenaufprägungseinheit als zweite elektrische Maschine mit einem Rotor und einem Stator ausgebildet, wobei der Rotor mit der ersten Verstärkungssonne gekoppelt ist. Dieser grundsätzliche Ansatz, die Momentenaufprägungseinheit als zweite elektrische Maschine auszugestalten, ist aus dem Stand der Technik bekannt und aufgrund der reibungsverlustfreien Vier-Quadranten-Ansteuermöglichkeit, d.h. mögliche Ansteuerung sowohl im motorischen als auch im generatorischen Betrieb, besonders vorteilhaft. Auf diese Weise können positive und negative Momente in beliebiger Richtung aufgeprägt werden.

Alternativ hierzu kann die Momentenaufprägungseinheit jedoch auch als ein Paar reibschlüssig wirkender Bremsen ausgebildet sein, wobei eine erste Bremse mit der ersten Verstärkungssonne und eine zweite Bremse mit einer zweiten Verstärkungssonne gekoppelt ist, die mit einem Satz auf dem Verstärkungssteg gelagerter und mit den Verstärkungsplaneten kämmender Richtungsumkehrungsplaneten kämmt. Der Vorteil dieser Variante liegt in dem üblicherweise geringeren Gewicht- und Bauraumbedarf zweier Bremsen im Vergleich zu einer elektrischen Maschine. Aufgrund der fehlenden bidirektionalen Ansteuerbarkeit einer Bremse ist es jedoch erforderlich, ein Paar von Bremsen vorzusehen, von denen eine über die erste Verstärkungssonne direkt auf die Verstärkungsplaneten wirkt und die andere über die zweite Verstärkungssonne indirekt über einen zusätzlichen Planetensatz auf die Verstärkungsplaneten wirkt. Diese zusätzlichen Planeten dienen der Umkehr der Wirkrichtung der zweiten Bremse, sodass auch bei dieser rein mechanischen Ausgestaltung der Momentenaufprägungseinheit sowohl positive als auch negative Momente eingebracht werden können, d.h. eine beliebige Verschiebung der Momentenverteilung auf die beiden Achsschenkel. Das konkrete Ausmaß der Momentenverteilungsvariation wird durch entsprechenden schlupfenden Betrieb der Bremsen gesteuert.

Im Hinblick auf die zu erzielende Verstärkung ist es erforderlich, wenn bei dieser Variante die Richtungsumkehrungsplaneten mit den Planetenstufen größeren Durchmessers der Verstärkungsplaneten kämmen.

Weitere Merkmale und Vorteile der Erfindung ergeben sich aus der nachfolgenden, speziellen Beschreibung und den Zeichnungen.

Es zeigen:
- Figur 1: eine erste Ausführungsform eines erfindungsgemäßen Antriebsstrangs,
- Figur 2: eine zweite Ausführungsform eines erfindungsgemäßen Antriebsstrangs,
- Figur 3: eine dritte Ausführungsform eines erfindungsgemäßen Antriebsstrangs,
- Figur 4: eine vierte Ausführungsform eines erfindungsgemäßen Antriebsstrangs,
- Figur 5: eine fünfte Ausführungsform eines erfindungsgemäßen Antriebsstrangs,
- Figur 6: eine sechste Ausführungsform eines erfindungsgemäßen Antriebsstrangs.

Gleiche Bezugszeichen in den Figuren deuten auf gleiche oder analoge Elemente hin.

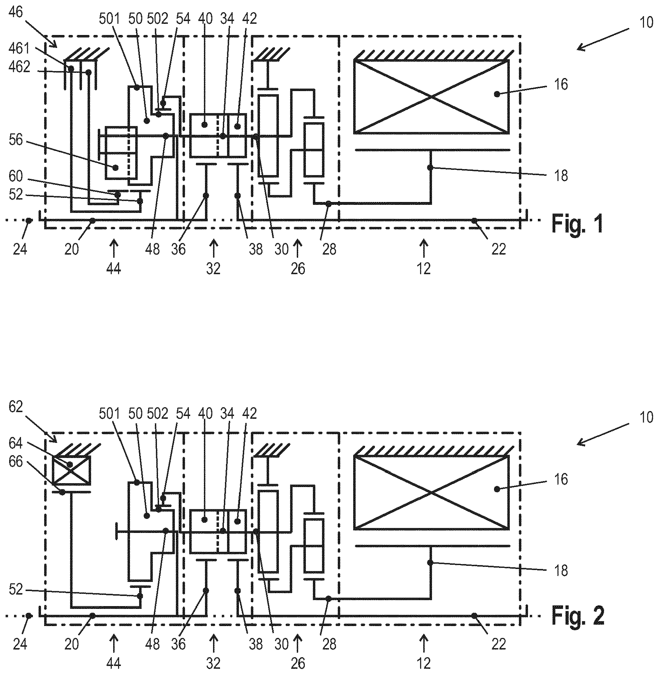

Figur 1 zeigt eine erste Ausführungsform eines erfindungsgemäßen Antriebsstrangs 10. Dieser umfasst eine Antriebsmaschine 12, welche als erste elektrische Maschine 12 mit einem gehäusefesten Stator 16 und einem drehbeweglich gelagerten Rotor 18 ausgebildet ist.

Zweck des Antriebsstrangs 10 ist es, das Antriebsmoment der ersten elektrischen Maschine 12 in geeigneter Weise auf die beiden Achsschenkel 20, 22 einer angetriebenen Achse 24 eines im Übrigen nicht näher dargestellten Kraftfahrzeugs zu übertragen. Der Begriff der Achse ist hier nicht als Bezeichnung eines konkreten Bauteils zu verstehen; vielmehr bezeichnet der Begriff hier eine geometrische Struktur, deren wesentliche, konstruktive Elemente die beiden Achsschenkel sind, die selbstverständlich im Montageendzustand in geeigneter Weise mit Antriebsrädern des Kraftfahrzeugs versehen sind.

Zur Realisierung der Momentenübertragung ist unter anderem eine Übersetzungsstufe 26 vorgesehen, deren konkrete Ausgestaltung für die vorliegende Erfindung irrelevant ist, weshalb in den Figuren lediglich eine stark vereinfachte, schematische Darstellung gewählt wurde. Unabhängig von der konkreten Ausgestaltung der Übersetzungsstufe 26 ist sie mit ihrem Eingangselement 28 mit dem Rotor 18 und mit ihrem Ausgangselement 30 mit einem Eingangselement eines nachfolgend angeordneten Differentials 32 verbunden. Das Differential 32 ist bei der gezeigten Ausführungsform als Stirnraddifferential ausgebildet, dessen Differentialsteg 34 als sein Eingangselement wirkt und dessen beide Differentialsonnen 36, 38, die mit zwei auf dem Steg 34 gelagerten und miteinander kämmenden Sätzen von Differentialplaneten 40, 42 kämmen, als dessen Ausgangselemente wirken. Entsprechend sind die Differentialsonnen 36, 38 jeweils mit einem der Achsschenkel 20, 22 verbunden. Grundsätzlich erlaubt die Erfindung auch die Verwendung anderer Bautypen von Differentialen; im Zusammenhang mit der koaxialen Ausgestaltung des erfindungsgemäßen Antriebsstrangs 10 hat sich jedoch die Bauweise als Stirnraddifferential als besonders günstig erwiesen. Gleichwohl darf diese Beschreibung nicht als einschränkend verstanden werden.

Der oben erläuterte Antriebsstrang mit Antriebsmaschine 12, Übersetzungseinheit 26 und Differential 32 ist grundsätzlich als Antriebsstrang eines Kraftfahrzeugs funktionstüchtig. Er würde das Moment der Antriebsmaschine 12 gleichmäßig auf die beiden Achsschenkel 20, 22 verteilen.

Um eine gezielt ungleichmäßige, insbesondere fahrsituationsangepasste Verteilung des Antriebsmomentes auf die Achsschenkel 20, 22 zu erzielen, ist weiter eine Momentenaufprägungseinheit vorgesehen, die über eine Verstärkungsmechanik 44 mit dem Differential 32 gekoppelt ist. Die Figuren 1 bis 6 unterscheiden sich lediglich in der Ausgestaltung der Momentenaufprägungseinheit, der speziellen Gestaltung der Verstärkungsmechanik 44 und ihrer Ankopplung an das Differential 32. Zur Vermeidung von Wiederholungen soll daher nachfolgend lediglich auf diese Elemente eingegangen werden. Bzgl. der übrigen Elemente gilt für alle gezeigten Ausführungsformen das oben zu Figur 1 Gesagte.

Die Momentenaufprägungseinheit der Ausführungsform von Figur 1 ist als Bremsenpaar 46 mit einer ersten Bremse 461 und einer zweiten Bremse 462 ausgebildet. Die Verstärkungsmechanik 44 weist einen Verstärkungssteg 48 auf, auf welchem ein Satz Stufenplaneten 50 gelagert sind. Die Stufenplaneten 50 weisen jeweils eine größere Planetenstufe 501 und eine kleinere Planetenstufe 502 auf, wobei sich die Größenangaben auf den jeweiligen Durchmesser der Planetenstufe beziehen.

Die größere Planetenstufe 501 kämmt mit einer ersten Verstärkungssonne 52, die mit der ersten Bremse 461 des Bremsenpaares 46 verbunden ist. Die Ankopplung der Verstärkungsstufe 44 erfolgt zum einen über deren Verstärkungshohlrad 54, welches mit der kleineren Planetenstufe 502 kämmt und mit dem Differentialsteg 34 verbunden ist, und zum anderen über den Verstärkungssteg 48, der mit dem Achsschenkel 20 verbunden ist. Auf diese Weise kann ein negatives Drehmoment der ersten Bremse 461 auf das Eingangselement des Differentials 32, d.h. dessen Differentialsteg 34, ausgeübt werden, wobei durch die sich zwischen erster Verstärkungssonne Verstärkungshohlrad 54 ergebenden Übersetzungsstufen insgesamt eine beträchtliche Momentenverstärkung ergibt, die typischerweise zwischen 8 und 12, vorzugsweise zwischen 9 und 10 liegt. Dies erlaubt eine im Vergleich zu den nicht dargestellten Fahrbremsen kleine Dimensionierung der Bremsen der Momentenaufprägungseinheit.

Da mittels einer Bremse naturgemäß nur eine unidirektionale Momentenaufprägung erfolgen kann, die Verschiebung der Momentenverteilung zwischen den Achsschenkeln 20, 22, jedoch vorzugsweise bidirektional erfolgen sollte, umfasst das Bremsenpaar 46 eine zweite Bremse 462, die über einen Satz Richtungsumkehrungsplaneten 56 an die Stufenplaneten 50 angekoppelt ist. Die Richtungsumkehrungsplaneten 56 sind mit den Stufenplaneten 50 kämmend auf dem Verstärkungssteg 48 gelagert und kämmen zur Ankopplung an das Bremsenpaar 46 zudem mit einer zusätzlichen Verstärkungssonne 60, die in der Terminologie der Patentansprüche als zweite Verstärkungssonne 60 bezeichnet wird.

Der Fachmann wird verstehen, dass die spezielle Ansteuerung des Bremsenpaares 46 zum einen von der speziell gewählten Mechanik von Verstärkungsstufe 44 und Differential 32 abhängt, zudem aber auch von der konkret zu erzielenden Momenten-Ungleichverteilung abhängt, die ihrerseits Ausfluss einer speziellen Steuerungsphilosophie ist, die jeweils auf den Einzelfall abgestimmt zu spezifizieren wäre.

Die Ausführungsform von Figur 2 unterscheidet sich von derjenigen von Figur 1 im Wesentlichen durch die Ausgestaltung der Momentenaufprägungseinheit als weitere elektrische Maschine 62 mit gehäusefestem Stator 64 und drehbeweglich gelagertem Rotor 66 anstelle des Bremsenpaares 46. Die elektrische Maschine 62 der Momentenaufprägungseinheit ist wesentlich kleiner gestaltet als die Antriebsmaschine 12. Dies ist möglich aufgrund der Momentenübersetzung in der Verstärkungseinheit 44. Der Rotor 66 ist mit der ersten Verstärkungssonne 52 verbunden. Da mittels der elektrischen Maschine 62 Momente in jeder Richtung aufgeprägt werden können, erübrigt sich eine zweite Ankopplung an die Verstärkungseinheit 44, was insbesondere die Richtungsumkehrungsplaneten und die zweite Verstärkungssonne 60 überflüssig macht. Zudem ist bei Verwendung einer elektrischen Maschine 62 als Momentenaufprägungseinheit eine höhere Verstärkung wünschenswert. Diese wird typischer Weise bei einem Verstärkungsfaktor 15-20, bevorzugt 16-18, liegen. Im Übrigen kann auf die obigen Erläuterungen verwiesen werden.

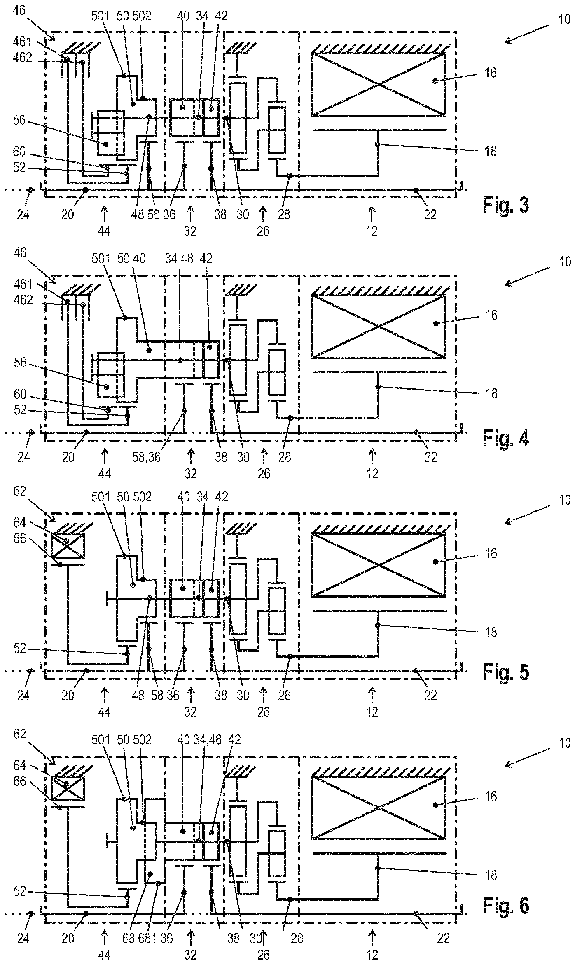

Die Figuren 3 und 4 zeigen erneut Ausführungsformen einer Ausgestaltung der Momentenaufprägungseinheit als Doppelbremse 46. Im Unterschied zu der Ausführungsform von Figur 1 erfolgt die Kopplung der Verstärkungsstufe 44 mit dem Eingangselement des Differentials 32, d.h. mit dem Differentialsteg 34, über den Verstärkungssteg 48. Differentialsteg 34 und Verstärkungssteg 48 sind hier fest miteinander verbunden. Die kleinere Planetenstufe 502 der Stufenplaneten 50 kämmt hier mit einer Koppelsonne 58, die fest mit dem Achsschenkel 20 verbunden ist.

Bei der Ausführungsform von Figur 4 sind der Differentialsteg 34 und der Verstärkungssteg 48 zu einem gemeinsamen Steg integriert und die Differentialplaneten 40 eines Satzes von Differentialplaneten sind als feste, gemeinsame Baueinheit mit den Stufenplaneten 50 ausgebildet. Daher können auch die Funktionen der Differentialsonne 36 und der Koppelsonne 58 in einem einzigen Element integriert sein. Die Vorteile dieser Maßnahme im Hinblick auf Gewichts- und Bauraumeinsparung sind für den Fachmann offensichtlich.

Figur 5 zeigt ein Äquivalent zur Ausführungsform von Figur 3, welches sich von dieser durch die Ausgestaltung der Momentenaufprägungseinheit als elektrische Maschine 62 und die sich daraus ergebenden, bereits im Zusammenhang mit Figur 2 erläuterten Modifikationen unterscheidet. Insoweit kann auf die Erläuterungen zu Figur 2 und 3 verwiesen werden.

Figur 6 zeigt eine Modifikation der Ausführungsform von Figur 5, bei der der Differentialsteg 34 und der Verstärkungssteg 48 zu einem gemeinsamen Bauteil integriert sind. Entsprechend könnten auch hier ein Satz Differentialplaneten 40 mit den Stufenplaneten 50 der Verstärkungsstufe 44 integriert werden. Damit ist jedoch nur eine vergleichsweise geringe Übersetzung realisierbar. Bei der gezeigten Ausführungsform ist daher ein zusätzlicher Satz Differentialplaneten 68 vorgesehen, die auf dem gemeinsamen Steg 40, 50 gelagert sind und mit den eigentlichen Verstärkungsplaneten, d.h. den Stufenplaneten 50 kämmen. Die zusätzlichen Verstärkungsplaneten 68 sind als feste, gemeinsame Baueinheit mit den Differentialplaneten 40 eines der Sätze von Differentialplaneten ausgebildet. Zur Steigerung der Übersetzung innerhalb der Verstärkungsstufe 44 sind die zusätzlichen Verstärkungsplaneten ebenfalls als Stufenplaneten ausgebildet, deren größere Planetenstufe 681 mit der kleineren Planetenstufe 501 der Stufenplaneten 50 kämmt. Diese allein der Steigerung der Verstärkungswirkung dienende Maßnahme ist selbstverständlich auch auf die Ausführungsform von Figur 4 grundsätzlich anwendbar. Im Übrigen kann auf die obigen Ausführungen verwiesen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Antriebsstrang
- 12: elektrische Antriebsmaschine
- 16: Stator von 12
- 18: Rotor von 12
- 20: Achsschenkel
- 22: Achsschenkel
- 24: angetriebene Achse
- 26: Übersetzungsstufe
- 28: Eingangselement von 26
- 30: Ausgangselement von 26
- 32: Differential
- 34: Differentialsteg
- 36: erste Differentialsonne
- 38: zweite Differentialsonne
- 40: Differentialplaneten
- 42: Differentialplaneten
- 44: Verstärkungsmechanik
- 46: Bremsenpaar
- 461: erste Bremse von 46
- 462: zweite Bremse von 46
- 48: Verstärkungssteg
- 50: Verstärkungsplaneten
- 501: größere Planetenstufe von 50
- 502: kleiner Planetenstufe von 50
- 52: erste Verstärkungssonne
- 54: Verstärkungshohlrad
- 56: Richtungsumkehrungsplaneten
- 58: Koppelsonne
- 60: zweite Verstärkungssonne
- 62: elektrische Maschine
- 64: Stator von 62
- 66: Rotor von 62
- 68: zusätzlicher Verstärkungsplanet
- 681: größere Planetenstufe von 68

## Patentansprüche

1. Antriebsstrang für ein Kraftfahrzeug, umfassend
- eine erste elektrische Maschine (12) mit einem Rotor (18) und einem Stator (16) zum Antrieb einer den Rotor (18) koaxial durchsetzenden, zwei Achsschenkel (20,22) aufweisenden, angetriebenen Achse (24),
- eine mit dem Rotor (18) gekoppelte, koaxial zu der ersten elektrischen Maschine (12) angeordnete Übersetzungsstufe (26),
- ein an seinem Eingangselement (34) mit einem Ausgangselement (30) der Übersetzungsstufe (26) gekoppeltes, koaxial zu der Übersetzungsstufe (26) angeordnetes und an seinen Ausgangselementen (36, 38) mit den Achsschenkeln (20, 22) gekoppeltes Differential (32),
- eine über eine Verstärkungsmechanik (44) mit dem Differential (32) gekoppelte und koaxial zu diesem angeordnete Momentenaufprägungseinheit (46, 62),
wobei die Verstärkungsmechanik (44) ein koaxial angeordnetes Planetengetriebe mit einer ersten Verstärkungssonne (52) und einem Verstärkungssteg (48), auf dem ein Satz von mit der ersten Verstärkungssonne (52) kämmenden Verstärkungsplaneten (50) gelagert ist, umfasst, und die erste Verstärkungssonne (52) mit der Momentenaufprägungseinheit (46, 52) gekoppelt ist,
**dadurch gekennzeichnet,**
**dass** die Verstärkungsplaneten der Verstärkungsmechanik (44) als Stufenplaneten (50) mit jeweils einer Planetenstufe größeren Durchmessers (501) und einer Planetenstufe kleineren Durchmessers (502) ausgebildet sind, wobei die erste Verstärkungssonne (52) direkt mit den Planetenstufen größeren Durchmessers (501) kämmt,
und **dass** die Verstärkungsmechanik (44) mit dem Eingangselement (34) des Differentials (32) gekoppelt ist.

2. Antriebsstrang nach Anspruch 1,
**dadurch gekennzeichnet,**
**dass** der Verstärkungssteg (48) mit dem Eingangselement (34) des Differentials (32) gekoppelt ist und die Verstärkungsmechanik (44) eine Koppelsonne (58) aufweist, die mit einem der Achsschenkel (20) verbunden ist und mit den Planetenstufen kleineren Durchmessers (502) der Verstärkungsplaneten (50) kämmt.

3. Antriebsstrang nach Anspruch 1,
**dadurch gekennzeichnet,**
**dass** der Verstärkungssteg (48) mit einem der Achsschenkel (20) verbunden ist und die Verstärkungsmechanik (44) ein mit dem Eingangselement (34) des Differentials (32) gekoppeltes Verstärkungshohlrad (54) aufweist, welches mit den Planetenstufen kleineren Durchmessers (502) der Verstärkungsplaneten (50) kämmt.

4. Antriebsstrang nach einem der vorangehenden Ansprüche,
**dadurch gekennzeichnet,**
**dass** das Differential (32) als Stirnraddifferential ausgebildet ist, welches als Eingangselement einen Differentialsteg (34) aufweist, auf dem zwei miteinander kämmende Sätze von Differentialplaneten (40, 42) gelagert sind, die jeweils mit einer als Ausgangselement wirkenden Differentialsonne (36, 38) kämmen.

5. Antriebsstrang nach Anspruch 4,
dass die Verstärkungsplaneten (50) als feste, gemeinsame Baueinheit mit den Differentialplaneten (40) eines der Sätze von Differentialplaneten (40, 42) ausgebildet sind.

6. Antriebsstrang nach Anspruch 4,
**dadurch gekennzeichnet,**
**dass** die Verstärkungsplaneten (50) mit ihren Planetenstufen kleineren Durchmessers (502) jeweils mit einer Planetenstufe größeren Durchmessers (681) eines auf dem Verstärkungssteg (48) gelagerten Satzes zusätzlicher Verstärkungsplaneten (68) kämmen, wobei die zusätzlichen Verstärkungsplaneten (68) als feste, gemeinsame Baueinheit mit den Differentialplaneten (40) eines der Sätze von Differentialplaneten (40, 42) ausgebildet sind.

7. Antriebsstrang nach einem der vorangehenden Ansprüche,
dass die Momentenaufprägungseinheit als eine zweite elektrische Maschine (62) mit einem Rotor (66) und einem Stator (64) ausgebildet ist, wobei der Rotor (66) mit der ersten Verstärkungssonne (52) gekoppelt ist.

8. Antriebsstrang nach einem der Ansprüche 1 bis 6,
**dadurch gekennzeichnet,**
**dass** die Momentenaufprägungseinheit als ein Paar (46) reibschlüssig wirkender Bremsen ausgebildet ist, wobei eine erste Bremse (461) mit der ersten Verstärkungssonne (52) und eine zweite Bremse (462) mit einer zweiten Verstärkungssonne (60) gekoppelt ist, die mit einem Satz auf dem Verstärkungssteg (48) gelagerter und mit den Verstärkungsplaneten (50) kämmender Richtungsumkehrungsplaneten (56) kämmt.

9. Antriebsstrang nach Anspruch 8,
**dadurch gekennzeichnet,**
**dass** die Richtungsumkehrungsplaneten (56) mit den Planetenstufen größeren Durchmessers (501) der Verstärkungsplaneten (50) kämmen.

## Claims

1. Drive train for a motor vehicle, comprising
- a first electric machine (12) with a rotor (18) and a stator (16) for driving a driven axle (24) which penetrates the rotor (18) coaxially and has two axle stubs (20, 22),
- a transmission stage (26) which is coupled to the rotor (18) and is arranged coaxially with respect to the first electric machine (12),
- a differential (32) which is coupled at its input element (34) to an output element (30) of the transmission stage (26), is arranged coaxially with respect to the transmission stage (26), and is coupled at its output elements (36, 38) to the axle stubs (20, 22),
- a torque overlaying unit (46, 62) which is coupled via a boosting mechanism (44) to the differential (32) and is arranged coaxially with respect to the latter,
the boosting mechanism (44) comprising a coaxially arranged planetary gear mechanism with a first boosting sun (52) and a boosting spider (48), on which a set of boosting planets (50) which mesh with the first boosting sun (52) are mounted, and the first boosting sun (52) being coupled to the torque overlaying unit (46, 52),
**characterized**
**in that** the boosting planets of the boosting mechanism (44) are configured as multi-step planets (50) with in each case one planetary stage of greater diameter (501) and one planetary stage of smaller diameter (502), the first boosting sun (52) meshing directly with the planetary stages of greater diameter (501),
and **in that** the boosting mechanism (44) is coupled to the input element (34) of the differential (32).

2. Drive train according to Claim 1, **characterized in that** the boosting spider (48) is coupled to the input element (34) of the differential (32), and the boosting mechanism (44) has a coupling sun (58) which is connected to one of the axle stubs (20) and meshes with the planetary stages of smaller diameter (502) of the boosting planets (50).

3. Drive train according to Claim 1, **characterized in that** the boosting spider (48) is connected to one of the axle stubs (20), and the boosting mechanism (44) has a boosting internal gear (54) which is coupled to the input element (34) of the differential (32) and meshes with the planetary stages of smaller diameter (502) of the boosting planets (50).

4. Drive train according to one of the preceding claims, **characterized in that** the differential (32) is configured as a spur gear differential which has, as input element, a differential spider (34), on which two sets of differential planets (40, 42) which mesh with one another are mounted, which sets of differential planets (40, 42) mesh in each case with a differential sun (36, 38) which acts as an output element.

5. Drive train according to Claim 4, in that the boosting planets (50) are configured as a fixed, common structural unit with the differential planets (40) of one of the sets of differential planets (40, 42).

6. Drive train according to Claim 4, **characterized in that** the boosting planets (50) mesh by way of their planetary stages of smaller diameter (502) in each case with a planetary stage of greater diameter (681) of a set of additional boosting planets (68) which are mounted on the boosting spider (48), the additional boosting planets (68) being configured as a fixed, common structural unit with the differential planets (40) of one of the sets of differential planets (40, 42).

7. Drive train according to one of the preceding claims, in that the torque overlaying unit is configured as a second electric machine (62) with a rotor (66) and a stator (64), the rotor (66) being coupled to the first boosting sun (52).

8. Drive train according to one of Claims 1 to 6, **characterized in that** the torque overlaying unit is configured as a pair (46) of frictionally acting brakes, a first brake (461) being coupled to the first boosting sun (52) and a second brake (462) being coupled to a second boosting sun (60) which meshes with a set of direction reversal planets (56) which are mounted on the boosting spider (48) and mesh with the boosting planets (50).

9. Drive train according to Claim 8, **characterized in that** the direction reversal planets (56) mesh with the planetary stages of greater diameter (501) of the boosting planets (50).

## Revendications

1. Chaîne cinématique pour un véhicule automobile, comprenant :
- une première machine électrique (12) avec un rotor (18) et un stator (16) pour l'entraînement d'un essieu moteur (24) traversant coaxialement le rotor (18) et présentant deux fusées d'essieu (20, 22),
- un étage de démultiplication (26) accouplé au rotor (18), disposé coaxialement à la première machine électrique (12),
- un différentiel (32) accouplé au niveau de son élément d'entrée (34) à un élément de sortie (30) de l'étage de démultiplication (26), disposé coaxialement à l'étage de démultiplication (26) et accouplé au niveau de ses éléments de sortie (36, 38) aux fusées d'essieu (20, 22),
- une unité d'application de couple (46, 62) accouplée, par le biais d'un mécanisme d'amplification (44), au différentiel (32) et disposée coaxialement à ce dernier,
le mécanisme d'amplification (44) comprenant un engrenage planétaire disposé coaxialement avec une première roue solaire d'amplification (52) et un porte-satellites d'amplification (48) sur lequel est supporté un jeu de satellites d'amplification (50) s'engrenant avec la première roue solaire d'amplification (52), et la première roue solaire d'amplification (52) étant accouplée à l'unité d'application de couple (46, 52),
**caractérisée en ce que**
les satellites d'amplification du mécanisme d'amplification (44) sont réalisés sous forme de satellites étagés (50) présentant à chaque fois un étage de satellites de plus grand diamètre (501) et un étage de satellites de plus petit diamètre (502), la première roue solaire d'amplification (52) s'engrenant directement avec les étages de satellites de plus grand diamètre (501),
et **en ce que** le mécanisme d'amplification (44) est accouplé à l'élément d'entrée (34) du différentiel (32).

2. Chaîne cinématique selon la revendication 1,
**caractérisée en ce que**
le porte-satellites d'amplification (48) est accouplé à l'élément d'entrée (34) du différentiel (32) et le mécanisme d'amplification (44) présente une roue solaire d'accouplement (58) qui est connectée à l'une des fusées d'essieu (20) et qui s'engrène avec les étages de satellite de plus petit diamètre (502) des satellites d'amplification (50).

3. Chaîne cinématique selon la revendication 1,
**caractérisée en ce que**
le porte-satellites d'amplification (48) est raccordé à l'une des fusées d'essieu (20) et le mécanisme d'amplification (44) présente une couronne dentée d'amplification (54) accouplée à l'élément d'entrée (34) du différentiel (32), laquelle s'engrène avec les étages de satellites de plus petit diamètre (502) des satellites d'amplification (50).

4. Chaîne cinématique selon l'une quelconque des revendications précédentes,
**caractérisée en ce que**
le différentiel (32) est réalisé sous forme de différentiel à pignons droits qui présente en tant qu'élément d'entrée un porte-satellites de différentiel (34) sur lequel sont supportés deux jeux de satellites de différentiel (40, 42) s'engrenant l'un dans l'autre, qui s'engrènent à chaque fois avec une roue solaire de différentiel (36, 38) agissant en tant qu'élément de sortie.

5. Chaîne cinématique selon la revendication 4,
en ce que
les satellites d'amplification (50) sont réalisés sous forme d'unité structurelle fixe commune avec les satellites de différentiel (40) de l'un des jeux de satellites de différentiel (40, 42).

6. Chaîne cinématique selon la revendication 4,
**caractérisée en ce que**
les satellites d'amplification (50) s'engrènent avec leurs étages de satellites de plus petit diamètre (502) à chaque fois avec un étage de satellite de plus grand diamètre (681) d'un jeu de satellites d'amplification supplémentaire (68) supporté sur le porte-satellites d'amplification (48), les satellites d'amplification supplémentaires (68) étant réalisés sous forme d'unité structurelle fixe commune avec les satellites de différentiel (40) de l'un des jeux de satellites de différentiel (40, 42).

7. Chaîne cinématique selon l'une quelconque des revendications précédentes,
en ce que
l'unité d'application de couple est réalisée sous forme d'une deuxième machine électrique (62) avec un rotor (66) et un stator (64), le rotor (66) étant accouplé à la première roue solaire d'amplification (52).

8. Chaîne cinématique selon l'une quelconque des revendications 1 à 6,
**caractérisée en ce que**
l'unité d'application de couple est réalisée sous la forme d'une paire (46) de freins agissant par engagement par friction, un premier frein (461) étant accouplé à la première roue solaire d'amplification (52) et un deuxième frein (462) étant accouplé à une deuxième roue solaire d'amplification (60) qui s'engrène avec un jeu de satellites d'inversion de sens (56) supportés sur le porte-satellites d'amplification (48) et qui s'engrène avec les satellites d'amplification (50).

9. Chaîne cinématique selon la revendication 8,
**caractérisée en ce que**
les satellites d'inversion de sens (56) s'engrènent avec les étages de satellites de plus grand diamètre (501) des satellites d'amplification (50).
